# EUROPÄISCHE PATENTANMELDUNG

(11) **EP 1 445 081 A1**
(43) Veröffentlichungstag der Anmeldung: **11.08.2004**
(21) Anmeldenummer: 04002007.5
(22) Anmeldetag: 30.01.2004
(51) Int. Cl.: B26F 1/40, B26D 7/01, B26D 7/26, B23Q 1/60, B23Q 5/28

(54) **Stanzvorrichtung**

(30) Priorität: 06.02.2003 DE 20301895 U
(71) Anmelder: Leiner GmbH, 66957 Trulben (DE)
(72) Erfinder: Leiner, Bernhard, 66957 Vinningen (DE)
(74) Vertreter: Patentanwälte Möll und Bitterich

(57) **Zusammenfassung**

Die Erfindung betrifft eine Vorrichtung zum Stanzen von Stanzgut (22) mit einem Stanztisch (10), auf dem das Stanzgut (22) für den Stanzvorgang angeordnet ist. Für den Stanzvorgang ist ein Stanzaggregat (6) auf den Stanztisch (10) absenkbar. Zur Positionierung des Stanzguts (22) unter dem Stanzaggregat (6) ist der Stanztisch (10) unterteilt in einen starren Tischunterbau (9) und eine darauf bewegliche Tischplatte (11). Mittels einer Antriebseinrichtung ist die Tischplatte (11) gegenüber dem Stanzaggregat (6) auf dem Tischunterbau (9) verschiebbar.

Um die Präzision und Geschwindigkeit des Nachstellens der Tischplatte (11) und damit des Stanzguts (22) zu erhöhen, wird erfindungsgemäß vorgeschlagen, dass die Antriebseinrichtung einen Linearmotor (14) umfasst.

## Beschreibung

Die Erfindung betrifft eine Stanzvorrichtung gemäß dem Oberbegriff des unabhängigen Patentanspruchs 1.

Die Herstellung von Stanzzuschnitten mit gattungsgemäßen Stanzvorrichtungen ist in den unterschiedlichsten Wirtschaftszweigen bekannt. Dementsprechend viele unterschiedliche Arten von Stanzgut werden in gattungsgemäßen Vorrichtungen verarbeitet. Beispielhaft seien Papier, Leder, textile und andere Gewebe sowie Kunststoffe erwähnt.

Für den Stanzvorgang wird das Stanzgut auf dem Stanztisch unterhalb des Stanzaggregats positioniert und der Stanzvorgang durch Absenken der Stanzwerkzeuge auf den Stanztisch ausgeführt. Gewöhnlich liegt das Stanzgut in Form von Bahnen oder Bögen vor, die zur Durchführung einer Vielzahl nebeneinander liegender Stanzungen schrittweise unter dem Stanzaggregat hindurchgeschoben werden. Zu diesem Zweck ist der Stanztisch unterteilt in einen stationären Tischunterbau, der fest mit dem Untergrund und der Stanzvorrichtung verbunden ist und eine auf dem Tischunterbau innerhalb von Längsführungen verschiebliche Tischplatte.

Die Herstellung der Stanzzuschnitte geschieht taktweise, wobei sukzessive die Arbeitsschritte Positionieren der Tischplatte des Stanztisches mit dem darauf liegenden Stanzgut unter dem Stanzaggregat, Absenken des Stanzaggregats mit den Stanzwerkzeugen zum Zwecke des Stanzens und schließlich Anheben des Stanzaggregats durchgeführt werden. Anschließend beginnt der nächste Takt wiederum mit dem Vorschieben der Tischplatte des Stanztisches um einen Schritt zur erneuten Positionierung des Stanzguts unter dem Stanzaggregat.

Eine derartige Stanzvorrichtung ist beispielsweise aus der DE 100 51 098 A1 bekannt. Dort ist eine Karrenbalkenstanze offenbart, deren Stanzaggregat an einem portalförmigen Rahmen aufgehängt ist. Unterhalb des Stanzaggregats sieht man den horizontalen Stanztisch, dessen bewegliche Tischplatte mit Hilfe eines Spindelantriebs entlang seitlicher Längsführungen verschoben werden kann. Der Spindelantrieb für den Tisch besteht im wesentlichen aus einer Gewindespindel, die mit Hilfe eines Elektromotors in Rotation versetzt wird. Die auf der Gewindespindel sitzende Spindelmutter ist starr mit de Tischplatte des Stanztisches verbunden, so dass bei Rotation der Spindel eine Längsbewegung der Tischplatte erzeugt wird.

Der Nachteil einer solchen Anordnung liegt zunächst darin, dass der beschriebene Antrieb mit Spiel behaftet ist. Trotz der Verwendung von Präzisionsteilen lässt sich das Positionieren des Stanzaggregats lediglich mit einer Genauigkeit von ±0,1 mm bewerkstelligen. Der Grund hierfür liegt in der Zwischenschaltung mechanischer Übertragungsglieder zur Erzeugung einer translatorischen Bewegung, die konstruktions- und verschleißbedingt stets ein Minimum an Spiel aufweisen.

Das Vorhandensein eines Spiels innerhalb der genannten Grenzen führt zum einen zu Ungenauigkeiten beim Stanzvorgang, was zwar bei einer Vielzahl von Anwendungsfällen hingenommen werden kann, sich jedoch bei einer intensiven Nutzung der Stanzvorlage als problematisch erweist. In jüngster Zeit werden die Stanzausschnitte im Zuge des Nestings derart eng aneinander gelegt, dass sich deren Umrisslinien tangieren. Das heißt, dass die in der vorangegangenen Stanzung erzeugte Schnittkante gleichzeitig die Schnittkante für die nachfolgende Stanzung bildet. Die dabei geforderte hohe Präzision ist mit bekannten Antrieben für den Stanztisch nicht erreichbar.

Zum anderen kommt infolge des Spiels in Verbindung mit den zahlreichen Beschleunigungs- und Abbremsvorgängen während des Nachstellens des Stanzaggregats ein weiterer Nachteil zum Tragen. Der ständige Wechsel zwischen Beschleunigungs- und Abbremskräften erzeugt mit jedem Lastwechsel einen Schlag zwischen den beweglichen Teilen, was den Verschleiß gattungsgemäßer Stanzvorrichtungen erhöht und ein vorzeitiges Auswechseln der davon betroffenen Teile erfordert.

Darüber hinaus sind Spindelantriebe sowohl hinsichtlich ihrer Endgeschwindigkeit als auch ihrer Beschleunigung von Haus aus relativ langsam. Die sich daraus ergebenden größeren Taktzeiten beim Stanzen beeinträchtigen zwangsläufig die Leistungsfähigkeit gattungsgemäßer Stanzvorrichtungen und damit deren Wirtschaftlichkeit.

Vor diesem Hintergrund stellt sich der Erfindung die Aufgabe, eine Stanzvorrichtung anzugeben, die hinsichtlich Präzision und Wirtschaftlichkeit den eingangs erwähnten Vorrichtungen überlegen ist.

Diese Aufgabe wird durch eine Stanzvorrichtung mit den Merkmalen des Patentanspruchs 1 gelöst.

Vorteilhafte Weiterbildungen ergeben sich aus den Unteransprüchen.

Der Vorteil der Erfindung liegt einerseits in der hohen Genauigkeit, mit der das Stanzgut unter dem Stanzaggregat positionierbar ist. Dadurch ist es möglich, Qualitätsstanzungen mit bisher unbekannter Exaktheit auszuführen. In der Folge eröffnen sich den Betreibern erfindungsgemäßer Stanzvorrichtungen neue Anwendungsfelder, die ihnen zu erheblichen Wettbewerbsvorteilen auf dem Markt verhelfen.

Andererseits lässt sich das Stanzgut mit hoher Beschleunigung und Endgeschwindigkeit in Stanzposition bringen, so dass die Taktzeiten eines Stanzvorgangs verkürzt werden und so die Stanzleistung einer erfindungsgemäßen Vorrichtung erhöht wird. Dies wirkt sich vor allem bei sogenannten Schnellläufern aus, die eine sehr hohe Taktfrequenz besitzen. Schon eine geringe Verkürzung der Taktzeit summiert sich bei diesen Stanzvorrichtungen im Laufe der Zeit zu einem beträchtlichen Zeitgewinn auf, was einer Steigerung der Maschinenleistung gleichkommt.

Die Erfindung wird nachstehend anhand eines in den Zeichnungen dargestellten Ausführungsbeispiels näher erläutert. Es zeigen
- Fig. 1: einen Querschnitt durch eine erfindungsgemäße Stanzvorrichtung entlang der in Fig. 2 dargestellten Linie I-I und
- Fig. 2: einen Längsschnitt durch die in Fig. 1 dargestellte Stanzvorrichtung entlang der Linie II-II.

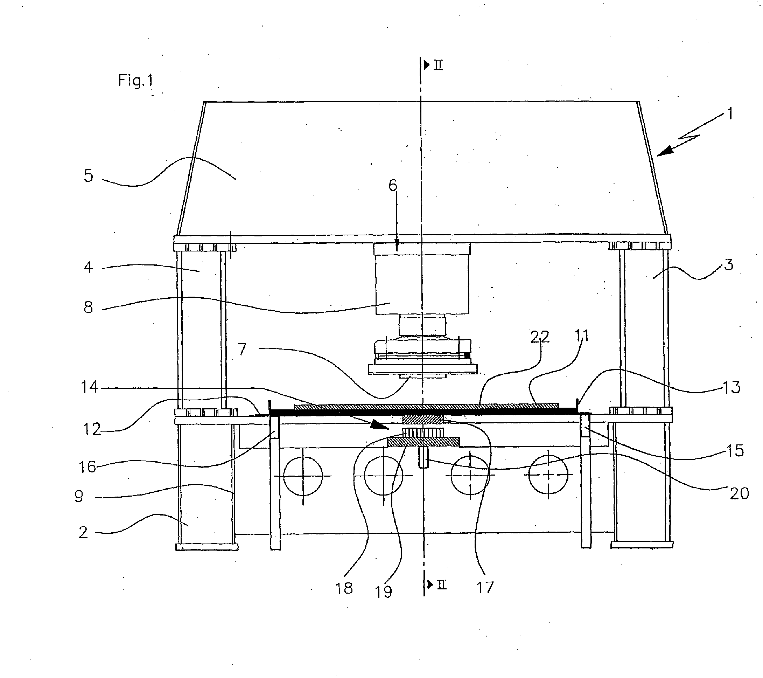

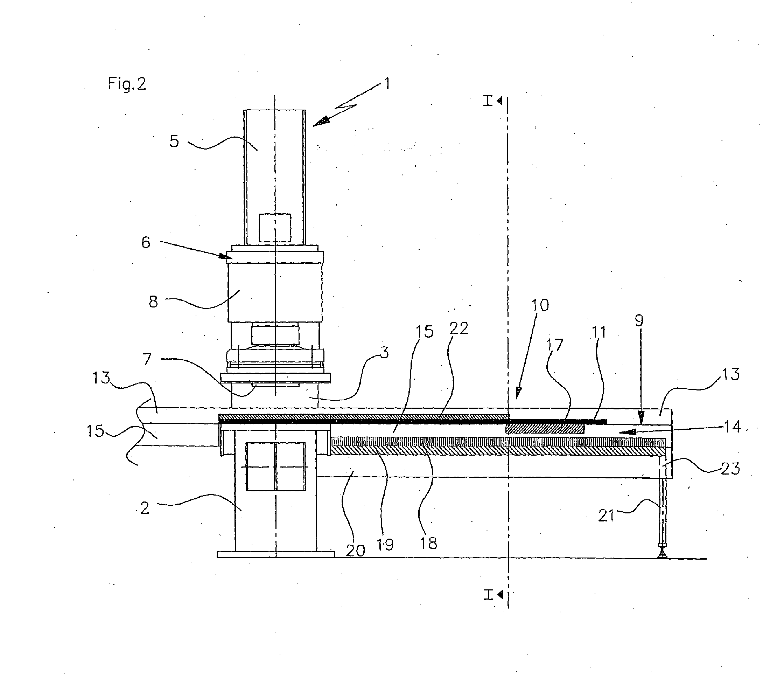

Die in den Fig. 1 und 2 dargestellte Stanzvorrichtung 1 besitzt einen massiven Unterbau 2, der als Auflager für einen portalförmigen Rahmen dient, welcher sich aus den seitlichen Stützen 3 und 4 sowie einem balkenförmigen, das obere Ende der Stützen 3 und 4 verbindenden Maschinenträger 5 zusammensetzt. An der Unterseite des Maschinenträgers 5 ist das Stanzaggregat 6 aufgehängt, das an seinem gegenüberliegenden unteren Ende die Stanzwerkzeuge 7 aufweist. Mit Hilfe einer Zylinderkolbeneinheit 8 lassen sich die Stanzwerkzeuge 7 absenken bzw. anheben.

Unterhalb des Stanzaggregats 6 sieht man einen horizontalen Stanztisch 10, der sich aus einem ortsfesten Tischunterbau 9 und einer darauf verschieblichen Tischplatte 11 zusammensetzt. Der ortsfeste Tischunterbau 9 schließt mit seinen achsparallelen Trägern 15 und 16 auf beiden Seiten des Unterbaus 2 an während die gegenüberliegenden freien Enden der Träger 15 und 16 von den Stützen 23 getragen sind. Der Tischunterbau 9 bildet auf diese Weise mit der Oberseite des Unterbaus 2 eine Ebene, auf der die bewegliche Tischplatte 11 des Stanztisches 10 lose ruht. Entlang der Längsränder der Tischplatte 11 sind seitliche Längsführungen 12 und 13 angeordnet, die fest mit dem Tischunterbau 9 verbunden sind und der Tischplatte 11 die Bewegungsrichtung vorgeben.

Auf der Tischplatte 11 liegt das Stanzgut 22 in Form eines schmalen länglichen Streifens. Aus dem Streifen sollen mehrere Zuschnitte ausgestanzt werden. Zu diesem Zweck ist es erforderlich, die Tischplatte 11 mit dem Stanzgut 22 nach jeder erfolgten Stanzung um einen bestimmten Betrag entlang der Längsführungen 12 und 13 auf dem Tischunterbau 9 vorzuschieben.

Der dafür erforderliche Antrieb besteht aus einem Linearmotor 14, der an der Unterseite der Tischplatte 11 parallel und zwischen den beiden Trägern 15 und 16 angeordnet ist. Der Linearmotor 14 weist als Primärteil ein Blechpaket 17 mit dreiphasigen Wicklung auf, das unmittelbar und in der Längsachse der Tischplatte 11 befestigt ist. Der Primärteil wirkt mit dem Sekundärteil in Form einer Magnetbahn 18 zusammen. Die Magnetbahn 18 liegt achsparallel und in geringem Abstand dem Primärteil gegenüber. Dabei ist die Magnetbahn 18 auf einer Tragplatte 19 angeordnet, die wiederum auf einem zu den Trägern 15 und 16 achsparallelen Balken 20 ruht. Der Balken 20 ist an seinem vorderen Ende mit dem Unterbau 2 verbunden, während sein gegenüberliegendes Ende von einer Stütze 21 getragen ist.

Durch Beaufschlagung der Antriebseinrichtung mit elektrischer Energie wird eine Vorschubkraft zwischen Magnetbahn 18 und Blechpaket 17 erzeugt, die den Stanztisch 11 entlang der Längsführungen 12 und 13 auf dem Tischunterbau 9 vorschiebt. Auf diese Weise wird mit Hilfe des Linearmotors 14 das Stanzgut 22 in kurzer Zeit und mit hoher Präzision unter dem Stanzaggregat 6 positioniert.

### Bezugszeichenliste:

| | | | |
|---|---|---|---|
| 1 | Stanzvorrichtung | | |
| 2 | Unterbau | | |
| 3 | Stütze | | |
| 4 | Stütze | | |
| 5 | Maschinenträger | | |
| 6 | Stanzaggregat | | |
| 7 | Stanzwerkzeuge | | |
| 8 | Zylinder-Kolben-Einheit | | |
| 9 | Tischunterbau | | |
| 10 | Stanztisch | | |
| 11 | Tischplatte | | |
| 12 | Längsführung | | |
| 13 | Längsführung | | |
| 14 | Linearmotor | | |
| 15 | Träger | | |
| 16 | Träger | | |
| 17 | Blechpaket | | |
| 18 | Magnetbahn | | |
| 19 | Tragplatte | | |
| 20 | Balken | | |
| 21 | Stütze | | |
| 22 | Stanzgut | | |
| 23 | Stütze | | |

## Patentansprüche

1. Vorrichtung zum Stanzen von Stanzgut (22) mit einem Stanztisch (10), auf dem das Stanzgut (22) für den Stanzvorgang angeordnet ist, und einem Stanzaggregat (6), das für den Stanzvorgang auf den Stanztisch (10) absenkbar ist, wobei der Stanztisch (10) einen starren Tischunterbau (9) und eine darauf bewegliche Tischplatte (11) aufweist, die mittels einer Antriebseinrichtung gegenüber dem Stanzaggregat (6) auf dem Tischunterbau (9) verschiebbar ist, **dadurch gekennzeichnet, dass** die Antriebseinrichtung einen Linearmotor (14) umfasst.

2. Vorrichtung nach Anspruch 1, **dadurch gekennzeichnet, dass** der Primärteil (17) des Linearmotors (14) an der Unterseite der Tischplatte (11) angeordnet ist und der Sekundärteil (18) auf einer Tragkonstruktion (19, 20) in lichtem Abstand darunter.

3. Vorrichtung nach Anspruch 1 oder 2, **dadurch gekennzeichnet, dass** die Kraftübertragung vom Linearmotor (14) auf die Tischplatte (11) unmittelbar erfolgt.

4. Vorrichtung nach einem der Ansprüche 1 bis 3, **dadurch gekennzeichnet, dass** der Sekundärteil (18) möglichst nahe an der Tischplatte (11) angeordnet ist.

5. Vorrichtung nach einem der Ansprüche 1 bis 4, **dadurch gekennzeichnet, dass** die Tischplatte (11) entlang von Längsführungen (12, 13) geführt ist.

6. Vorrichtung nach einem der Ansprüche 1 bis 5, **dadurch gekennzeichnet, dass** die Tischplatte (11) Mittel aufweist, die das Stanzgut (22) während der Beschleunigungs- und Abbremsphase der Tischplatte (11) gegen Verrutschen sichern.
